# EUROPEAN PATENT SPECIFICATION

(11) **EP 3 117 157 B1**
(45) Date of publication and mention of the grant of the patent: **29.08.2018**
(21) Application number: 15720805.9
(22) Date of filing: 03.03.2015
(51) Int. Cl.: F24F 13/30, B01D 53/14, B01D 53/26, B01D 53/28, F28F 13/00, F24F 3/14, F24F 5/00, F28D 21/00, F25D 17/06

(54) **MODULAR CONTACTOR WITH HYDROPHOBIC FLAT MEMBRANES AND AIR CONDITIONING PLANT THEREWITH**
MODULARE SCHÜTZ MIT FLACHEN HYDROPHOBEN MEMBRANEN UND KLIMAANLAGE DAMIT
CONTACTEUR MODULAIRE À MEMBRANES PLANES HYDROPHOBES, ET INSTALLATION DE CLIMATISATION ASSOCIÉE

(30) Priority: 06.03.2014 IT RM20140105
(43) Date of publication of application: 18.01.2017
(73) Proprietor: Universita' degli Studi di Genova, 16126 Genova (IT)
(72) Inventor: ISETTI, Carlo, I-16126 Genova (IT); NANNEI, Enrico, I-16126 Genova (IT); LAZZARI, Stefano, I-16126 Genova (IT)
(74) Representative: Iannone, Carlo Luigi
(86) International application number: PCT/IT2015/000054
(87) International publication number: WO 2015/132809

(56) References cited:
- EP-A2- 0 678 321
- WO-A1-2012/042553
- WO-A2-2012/125909
- DE-A1- 19 545 335

## Description

The present invention concerns a modular three-fluids contactor with hydrophobic planar membranes and high-efficiency integrated plant for air conditioning utilising such a contactor.

More in detail, the present invention radically innovates the CMC contactor ("Combined Membranes Contactor") with capillary membranes which is the subject matter of the patent application WO 2012/042553. The new contactor is composed by modules which are easily stackable and can be produced in an industrial way. The invention concerns also an integrated plant for air conditioning utilising the improved CMC according to the invention. The plant integrates a hybrid plant operating with liquid desiccants and heat exchange batteries placed in series/parallel. The integrated plant is provided with a thermovector fluid flow switching valve in order to implement with higher energetic efficiency also the winter heating besides the conditioning in the intermediate and summer seasons.

### State-of-the-art

In the important fields (industrial and civil) of the treatment of air for the dehumidification and the conditioning, besides the traditional vapour compression refrigeration cycles, plants utilising hygroscopic solutions (liquid desiccants) such as, for example, aqueous solutions of LiCl, CaCl2, etc. find more and more room as well.

It is indeed known since long time that the dehumidification of air can be realised also in a "chemical" way, utilising solid or liquid desiccant substances. Such a method can be advantageous because it allows the control of the specific humidity irrespective of the temperature. This entails the possibility of obtaining significant energetic savings with respect to the traditional dehumidification process, in particular in the presence of high latent loads or when one has at disposal "free" thermal energy to regenerate the desiccant substance. Such substances are mainly utilised in the industrial field for the dehumidification of air in devices providing the direct air-solution contact, both in the absorption and in the regeneration phase.

For this reason, mixed (hybrid) plants appear today to be particularly interesting for their high energetic efficiency, which utilise liquid desiccants to face the latent part of the thermal load (air dehumidification) and vapour compression refrigeration cycles to face the sensible part (air cooling).

In such hybrid systems, the cooling machine can operate at an evaporation temperature that is higher and a condensation temperature of the thermovector fluid that is smaller of what can be obtained in the traditional plants, and this entails a clear improvement of the energetic efficiency of the refrigeration cycle (larger coefficients of performance (COP)). The regeneration is realised by exploiting the thermal energy transfer to the condenser of the refrigeration cycle and therefore these plants need not further thermal energy. The overall energetic saving can attain 30-40% with respect to the traditional technology, which, in order to dehumidificate air, has to necessarily cool down the latter under dew temperature, with further improvements in the case of high latent loads.

However, the utilisation of the liquid desiccants stresses phenomena of dragging of absorbent solution drop loads in the air in the plants with dehumidification contactors in direct contact (the acqueous solutions of LiCl, CaCl2 are highly corrosive with respect to almost all the metals with technical interest).

Moreover, another objective of the international research is the reduction of the absorbed power from the desiccant solution circulation pumps. These objective is sought by reducing the solution flowrate both in the dehumidification contactor and in the regeneration contactor and by controlling temperature of the solution by means of internal thermal exchanges. The thermal exchanges are realised by constructing thermovector fluids circulation systems (cold water, air cooled by free-cooling techniques).

Since some years in the University of Genoa, the possibility of avoiding the air-desiccant direct contact by means of the use of hydrophobic membrane contactors has been explored both experimentally and theoretically. In these components, the energy and mass exchanges between the phases occur through a membrane, avoiding the direct contact between the phases. By this technology, one can avoid the drawbacks of the direct contact such as, for example, the dragging of desiccant the droplets in the treated air, the progressive pollution of the solution by atmospheric powders, the impossibility of use on transportation means, etc. The membrane contactors allow high exchange surfaces per unit volume, limited load leaks on the air side, and can be utilised on transportation means.

A first result of this research has been a three-fluid contactor (air, desiccant liquid and thermovector fluid) with capillaries in hydrophobic membrane of separation between air and desiccant, according to what is described in the patent application WO2012/042553. The use of this contactor allows to realise compact hybrid plants which are apt also to the use on transportation means.

However, the conductor of the International patent application WO2012/042553 presents the following inconveniences:
1. The air flow within the membrane capillaries occurs in conditions of laminar motion regime, with very small mass and heat transportation coefficients on the air side.
2. One has to utilise self-supporting capillaries with small diameter (even smaller than 1 mm), what inevitably entails high load losses for the process air and/or reduced flowrate of air;
3. The CMC is not very compact and is not modular.

It is object of the present invention to provide a three-fluids contactor which solves the problems and overcomes the drawbacks of the prior art.

It is subject matter of the present invention a modular contactor device as in the enclosed claims.

It is further subject matter of the present invention and integrated air dehumidification and conditioning plant according to the enclosed claims.

It is further specific subject matter of the present invention a free cooling plant for rooms according to the enclosed relevant claims.

The invention will be now described by way of illustration but not by way of limitation, with particular reference to the drawings of the enclosed figures, wherein:
- figure 1a shows a rectangular frame typical of the invention, with the apertures for the refrigerant (A), which flows inside the tubes, and for the desiccant (B), which flows outside the tubes;
- figure 1b shows a repetitive module realised by thermal welding or soldering the frame on the top and on the bottom to a membrane, according to the invention;
- figure 1c shows a detail of the tubes wherein the refrigerant flows (the observation point is from inside the aperture A of figure 1a); one notes also the passage space between the tubes for the desiccant entering the aperture B;
- figure 2a shows a detail of the frame, the membrane and a spacer placed between two frames, according to the invention;
- figure 2b shows the assembly of a CMC component according to the invention constituted by 5 superposed frames and 6 spacers;
- figure 2c shows a detail of figure 2b, with the perimetral holes obtained in the frames for the insertion of the assembly tie-beams;
- figure 3a shows a detail of the end rigid plates, according to the invention, with the cylindrical joints of inlet and outlet of the refrigerant fluid and the desiccant and with the holes for the assembly tie-beams;
- figure 3b shows a final assembly in the CMC according to the invention;
- figure 4 shows a rectangular frame according to a further embodiment of the invention, wherein the thermovector fluid makes a coil path with a "U" inversion;
- figure 5 shows an angular frame according to a further embodiment of the invention, wherein the thermovector fluid that makes a coil path with two "U" inversions;
- figure 6 shows an assembly of a CMC component according to the invention which is constituted by superposed frames according to figure 5 and by a suitable number of spacers;
- figure 7 shows the same CMC of figure 7 in a top view;
- figure 8 shows several sets of modules according to the invention and connected together to form a CMC;
- figure 9 shows a hybrid plant for the dehumidification of air with CMC1 (dehumidifier), CMC2 (regenerator) and HE heat recuperator, according to the invention; in the circuit, there are the following components indicated: with L the lamination valve, with ET the solution/expansion reserve container, with C the compressor and P1 and P2 are pumps;
- figure 10 shows an integrated plant according to the invention for the conditioning of air with CMC1 (dehumidifier) and CMC2 (regenerator) with two traditional thermal exchange batteries in series and in parallel (B1 and B2) ; the thermal recuperator HE is disposed between CMC1 and CMC2. VC represents the 4-ways switching valve on the circuit of the batteries.

### Detailed description of embodiments of the invention

The modular CMC conductor according to the invention is obtained by superposing plane modules and spacers in an alternated way. The modules, with flat geometry, are delimited on the top and on the bottom by a membrane sheet which is thermally welded or soldered on a suitable frame. The flat spacers support the membrane sheets, allowing the process air flow. Obviously, different spacers forms can be adopted, which are also suitable to allow a better longitudinal mixing of the air.

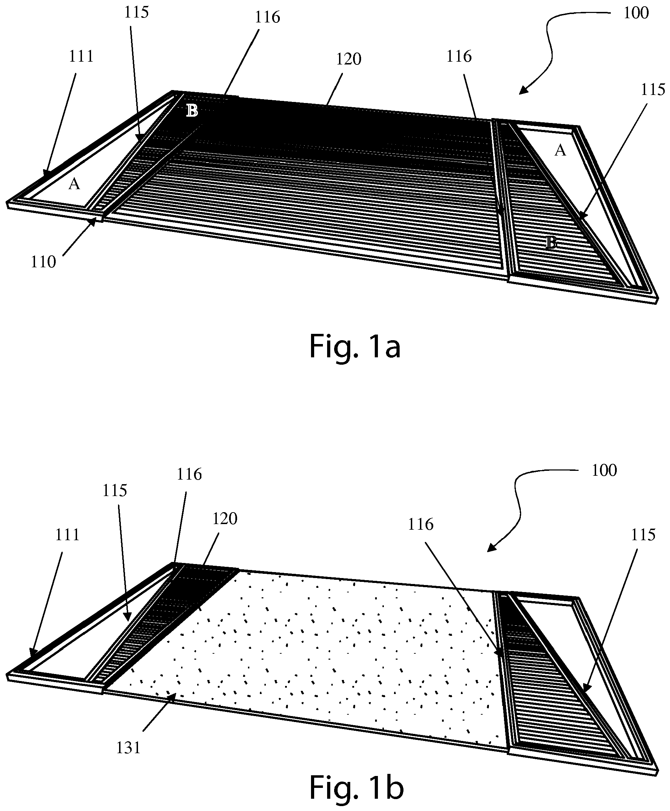

Figure 1a shows an internal view of a module 100 of the CMC contactor according to the invention. One observes a rectangular frame 110, which is a basic component for the construction of the CMC contactor (but other non-rectangular frame forms are equally possible, therefore in general one will speak of a generic frame).

Within the frame, rigid tubes 120 are disposed, which are in a material resistant to the corrosion (for example titanium) and in whose internal volume the flow of the refrigerant is provided. The tubes, with a main extension direction, are suitable to be run through by said thermovector fluid and fixed to said frame 110, 110', 110" in such a way that they are spaced apart and disposed on the frame plane.

Preferably, the tubes cross the frame elements 115 and by means of their internal volumes connect the apertures A with each other, which are placed at the end of the frame. In the present embodiment further frame elements 116 are provided, which are internal to the elements 115. The tubes, crossing the elements 116, leave free sections to allow, between the apertures B, the flowing of the desiccant solution.

The tubes 120 can have a cross section which is circular, rectangular or of any other geometrical form, provided that they are spaced apart to the end of allowing the flow of the desiccant solution.

Figure 1b shows the repetitive module 100 of the CMC, which is realised by thermal welding or soldering / gluing on the top and on the bottom a membrane 131, 132 to the frame. A chamber is therefore created between the membranes 131, 132 and the tubes 120, wherein the desiccant solution will be able to flow between the entrance B on one side and the exit B on the other side.

In the figures, a gasket 111 can be recognised, which is suitable to guarantee the tight connection of the stacked modules.

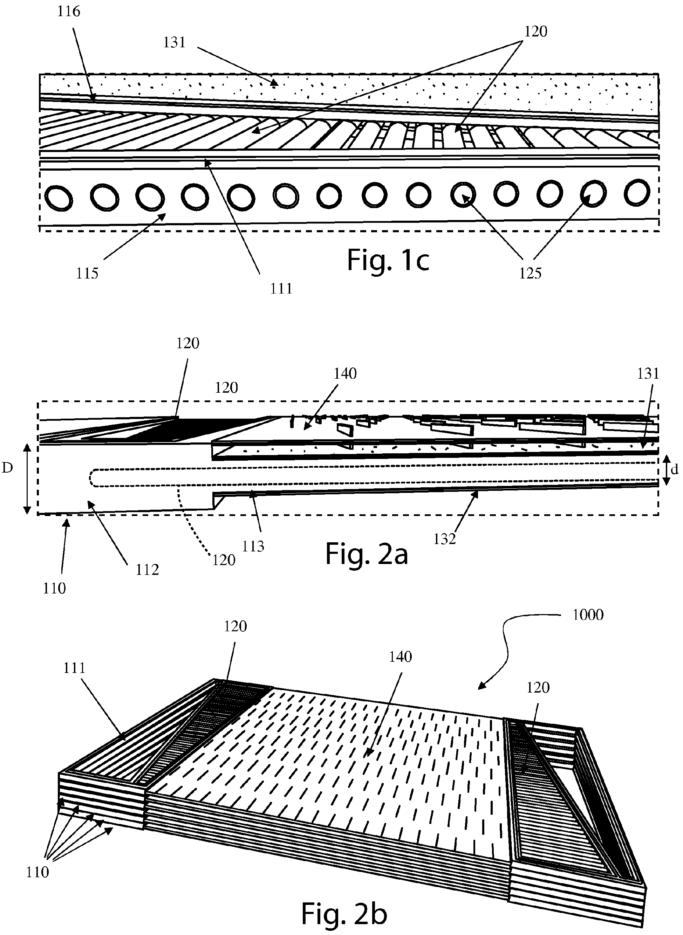

In figure 1c, a detailed view of such a module is provided with reference to the input section, along the frame element 115, of the refrigerant fluid flowing within the tubes. In such a figure, between tubes 120, the presence can be recognized, in the frame elements 116, of free openings for the inlet and outlet of the desiccant from the interspace delimited on the bottom and on the top by membrane sheets 131, 132. The membrane 131, 122 extends between the opposite elements 116 and the opposite sides of the frame 110. However, any other configuration suitable to create an inlet and an outlet of the desiccant is here encompassed.

It is also possible to insert a spacer network (not shown) between the tubes 120 and the membrane 131, 132.

The alternated superposition of modules 100 and flat spacers allows to realise the CMC according to the invention.

In figure 2a, one can recognise the upper spacer 140 which is placed above the upper membrane 131 of the module 100. Between the membrane and the spacer, a room for the passage of process air is created. One notes that in the illustrated embodiment the frame 110 has different thicknesses. The part 112, external to the zone covered by the membrane 131, 132 and the spacer 140, has a larger thickness D, whilst the internal part 113, corresponding to the surface covered by membrane 131, 132 and spacer 140, has a smaller thickness d. These allows on one hand to make the desiccant flowing and pouring out in the B zones and the refrigerant in the A zones, on the other hand to create a suitable free section for the passage of process air only in the central part of module 100. One could also think about providing a spacer on the whole surface of the frame, shaping it in such a way to create separated compartments for the inlet/outlet of refrigerant, desiccant, process air.

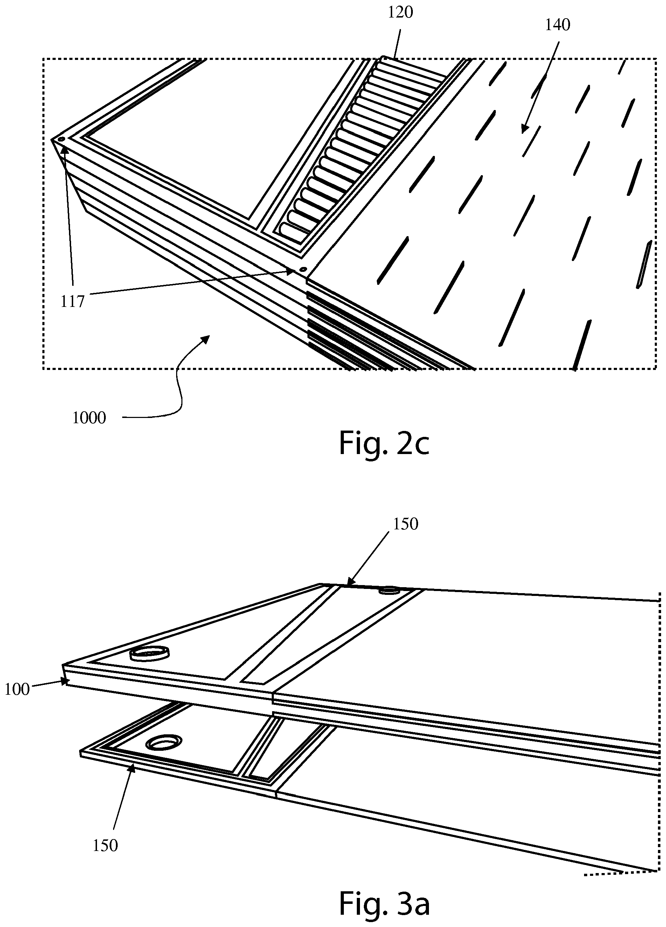

In figure 2b, the perspective view of a CMC 1000 composed by five frames 110 and six spacers 140 is given. Suitable gaskets 111 seal the collector compartments of the refrigerant fluid (A) and the desiccant (B). The CMC is finally delimited by two end rigid plates presenting cylindrical joints of inlet and outlet of the refrigerant fluid and the desiccant, shown in figure 3a.

Figure 2c gives the detail of the holes 117 provided in the modules for the positioning of the assembly tie-beams which are able to exert the traction needed to keep together the assembly of the CMC component and to guarantee the good functionality of all the baskets. The component is finally completed by two rigid end plates 150, provided with holes for the tie-beams as well, and provided with inlet and outlet connections for the refrigerant fluid and the desiccant, as represented in figure 3a.

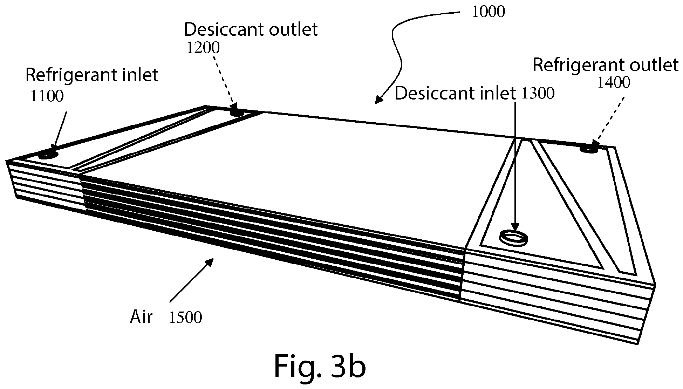

Figure 3b shows finally the view of the CMC as it appears when completed. The air enters and exits through the compartments 1500. In the case of countercurrent flow, the refrigerant enters into the inlet 1100 and exit from the outlet 1400. The desiccant enters from the entrance 1300 and exits from the outlet 1200.

The improvement introduced by the invention entails definite advantages in terms of compactness with respect to the previous component, improving further its energetic efficiency thanks to the possibility of utilising liquid desiccant with better thermal-physical characteristics and thanks to the reduction of the load leaks on the air side and on the solution side. It is here recalled that the solutions of LiCl combine high mass transportation potential and the relatively low viscosity.

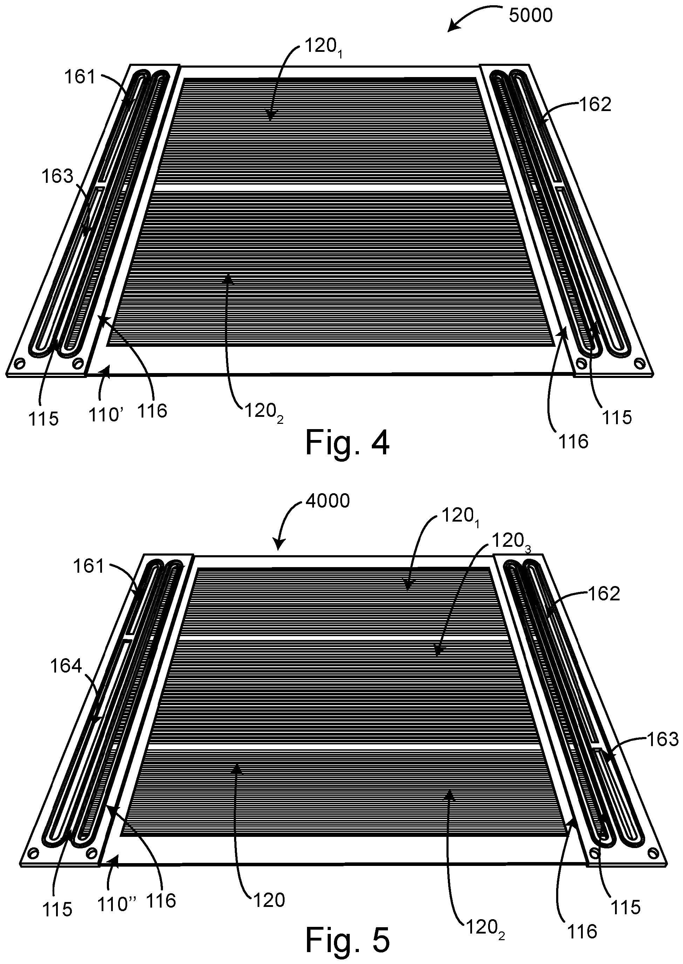

With reference to figure 4, a further embodiment of the present invention provides a contactor 5000 the tubes 120 are divided into two groups 120₁ and 120₂. There is an inlet of the thermovector fluid in the part 161 of the frame, which is divided by the part 163 of the frame from which the thermovector fluid exits after having made the U-inversion in the part 162 on the opposite side of the frame at the opposite end of the tubes. In such a way, one can place inlet and outlet on the same side of the frame.

Figure 5 illustrates an embodiment of the invention which is similar to that of figure 4, wherein the contactor 4000 provides that the tubes 120 are divided into three groups 120₁, 120₂, 120₃. The frame on a side is divided into two parts 161 of inlet and 162 of inversion, whilst on the opposite side it is divided into a part of inversion 162 and outlet 163. In such a way, the path of the thermovector fluid is tripled in the same frame.

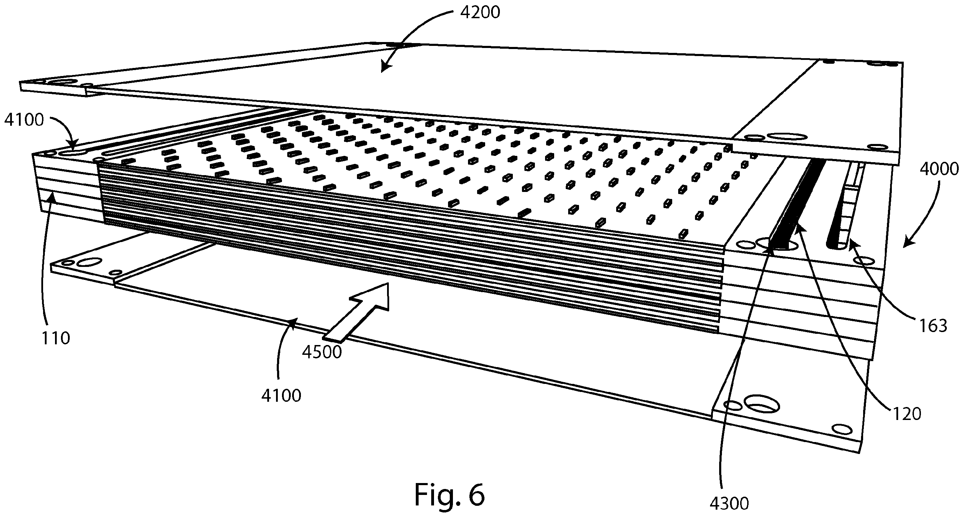

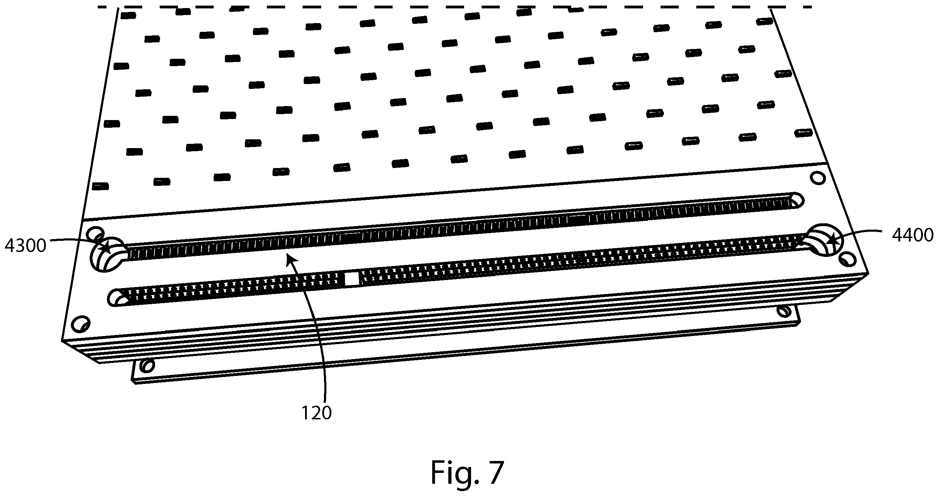

Figures 6 to 8 illustrated the CMC component 4000 according to the invention in the case wherein the frames 110" are those of figure 5. The coverings 4100 and 4200 are illustrated, which limit on the top and on the bottom the frames stack constituting the CMC. The hole 4300 is for the inlet or the outlet of the desiccant fluid, whilst the hole 4400 is for the inlet or outlet of the thermovector fluid. The air enters in the direction 4500. The frames are welded or soldered with each other in groups, in such a way to reduce the use of O-ring gaskets.

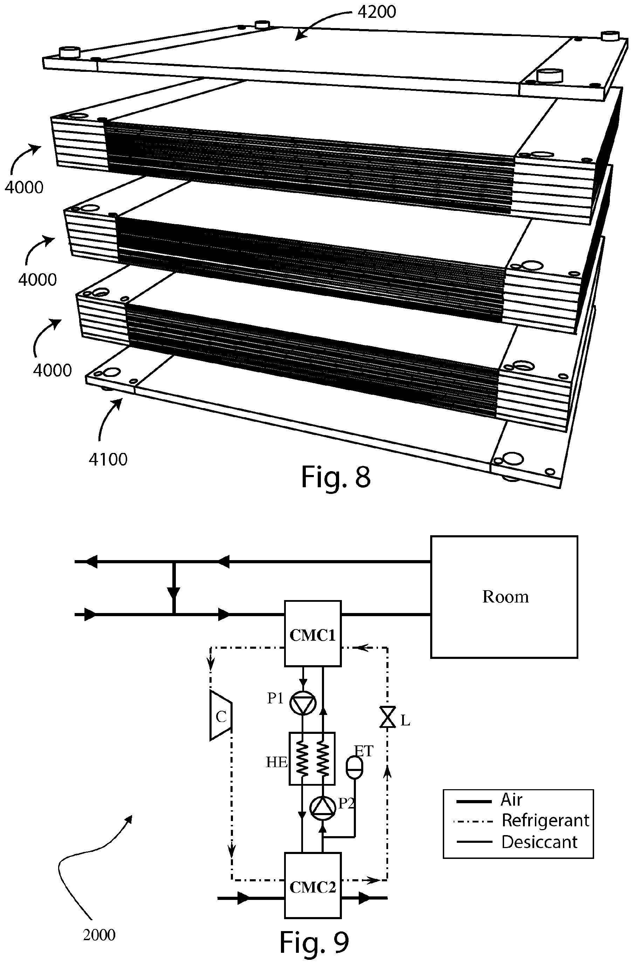

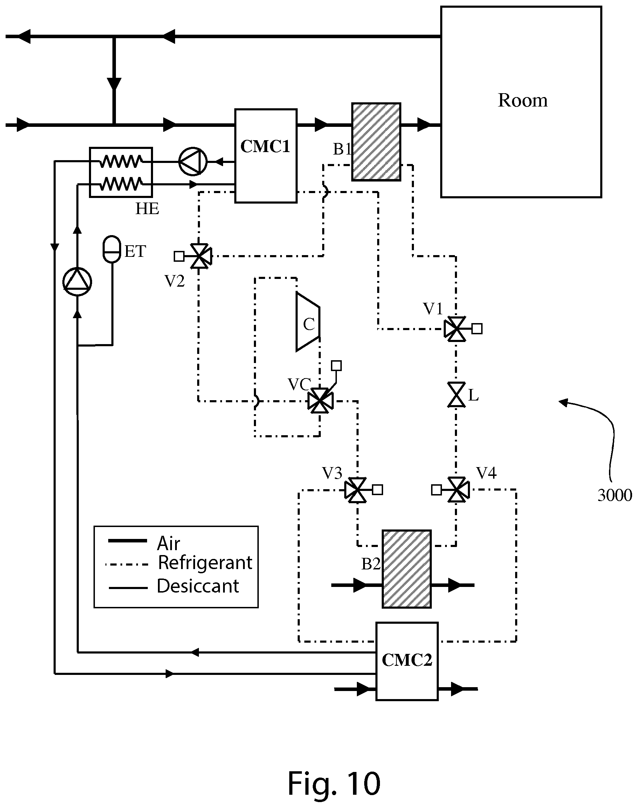

The following figures (figure 9 and figure 10) illustrate two possible architectures of hybrid plants utilising CMC, according to the invention. The plant of figure 9 is particularly useful to dehumidificate air. A first contactor CMC1 according to the invention is utilised to dehumidificate air whilst a second contactor CMC2 according to the invention works as regenerator to re-concentrate the diluted solution coming from the CMC1 (and therefore more in general CMC2 is a regeneration unit). The thermal and mass exchanges in the two contactors are opposed one to the other: in the CMC2, the water absorbed in the CMC1 is discharged in the external air. This mass transportation between CMC1 and CMC2 is realised by a solution exchange between the two components, which is obtained with the pumps P1 and P2. In the circuit connecting CMC1 and CMC2, a heat exchanger (recuperator) HE is inserted. As represented in figure 9, two pumps P1 and P2 feeding HE move the desiccant solution in this circuit. The recuperator HE, in a material resistant to corrosion (plastic/resistant metal), reduces the amount of parasitic thermal energy that transfers from CMC2 to CMC1 operating a thermal exchange between the hot and more concentrated solution returning from the CMC2 and the diluted and cold solution from CMC1. C is the compressor to cool down the refrigerant fluid, L is a lamination valve, ET is an expansion tank/vessel for the desiccant solution.

It is observed that the possibility of dehumidificating air without necessarily having to cool it down can allow energetic savings above all in the intermediate seasons. In the case it is however necessary to realise, besides the air dehumidification, also a significant cooling/heating of it, it is appropriate to make reference to plant architectures with thermal exchange batteries (evaporator/condensator) placed in series/parallel to the CMC and feed it by the flow rate of the refrigerant fluid.

Figure 10 shows a realisation scheme of an integrated plant wherein the two CMCs, the dehumidificator CMC1 and the regenerator CMC2 according to the invention are disposed respectively in series and in parallel to the traditional batteries B1 and B2 of thermal exchange. The evaporation/condensation temperature of the refrigerant fluid in the batteries B1 and B2 is preferably respectively the same in the CMC1 and CMC2. By means of the three-ways valves V1, V2, V3 and V4 it is possible, in an embodiment, to subdivide the flow rate of the refrigerant between CMC1 and B1 as well as between CMC2 and B2, up to a point wherein one can exclude completely the one or the other of the two cited components. The integrated plant of figure 10 can therefore operate as the hybrid of figure 9 and as traditional heat pump.

This architecture of integrated plant presents great interest for the conditioning of electrical vehicles. Indeed, it can operate as hybrid in the summer/intermediate seasons regime and as heat pump in the winter regime by using a four-way switching valve. One has to recall indeed that the winter heating, if realised with the direct use of electric energy, disadvantages heavily the autonomy of an electric vehicle (because in this case thermal energy from the engine is not available as in the traditional vehicles). In the case of figure 10, one can send hot air the cabin inverting, by means of the four-ways switching valve VC, the direction of circulation of the refrigerant fluid between the only batteries, operating the three-ways valves to close partially/totally the refrigerant feed to the CMC. The switching valve VC allows to pass from the summer functioning to the winter functioning by inverting the flow of the refrigerant. The inversion can be realised automatically when requested by the climate conditions. In the case of complete exclusion of the CMC, the plant of figure 10 would function with the battery B2 operated as an evaporator and B1 as condensator and in fact as a traditional heat pump by feeding hot air in the cabin.

In the sector of the air treatments, besides the dehumidification of air and the ambient conditioning, it is here recalled that the invention can have many other applications: for example, in the sector of conservation of foodstuffs (for example refrigerated storehouses, refrigerated transportations) a possible use concerns the prearranged dehumidification of air before its inlet in the batteries to cool down air to the end of reducing/avoiding defrosting on the batteries.

The CMC component can be utilised as evaporative condenser utilising, in place of the desiccant, water to reduce, thanks to the intense latent heat exchanges with the ambient air, the condensation temperature of the refrigeration cycles, improving their energetic efficiency (larger COP values). It is also possible, always utilising simply water, to use CMC components to realise forms of passive free cooling of confined rooms, etc. In the case of rooms free cooling plant, an evaporative free cooling unit is comprised for the production of free cooled water to feed suitable radiating panels to the end of realising internal comfort conditions in said rooms. Said free cooling unit utilises a three fluids, air, refrigerant fluid and a liquid phase contactor, the plant being characterised in that:
- the contactor is the modular contactor according to the invention;
- the liquid phase is water that cools down humidifying air running through the modular contactor;
- the refrigerant fluid feeds in closed circuit said radiating panels and is constituted by water flowing within the tubes of the modular contactor.

The CMC contactor subject matter of the present application presents, with respect to the capillaries contactor described in WO2012/042553, the following advantages:
1. The airflow through suitable spacers placed between the membranes occurs in conditions of turbulent motion regime and not in the laminar motion regime any longer, with much larger mass and heat transportation coefficients on the air side.
2. Thin flat membranes (100-200 micrometers) can be used without having necessarily to use self-supporting capillaries of small diameter (even smaller than 1 mm) to which high load losses and/or reduced flow rate inevitably corresponded for the process air;
3. The new CMC, on equal performances, is much more compact and is modular: indeed it can be assembled by superposing modules and spacers up to the achieving of the exchange surface required in the various applications.

The integrated plant for the air conditioning with the CMC improved according to the invention is composed by the hybrid plant already described in WO2012/042553, with traditional batteries of thermal exchanges placed in series/parallel and has at disposal a refrigerant flow switching valve to be able to realise with good energetic efficiency the winter heating besides the conditioning in the intermediate and summer seasons. The plant according to the invention allows indeed remarkable savings of energy both during the dehumidification and the free cooling typical of the intermediate and summer seasons and winter case, when it can operate as simple heat pump to feed hot water in the ambient. Its application to the conditioning of electric vehicles is particularly interesting to the end of obtaining relevant increasing of autonomy, on equal comfort of the passengers. Indeed, in the totally electrical driven vehicles, it is not possible to exploit the thermal energy discarded by the engine to heat up hot air to be fed in the cabin as in the traditional vehicles. The proposed plant is able to utilise, thanks to the improved the CMC with tubes in a material resistant to corrosion (for example titanium), solutions of LiCl/CaCl₂ as desiccants, avoiding any corrosion problem.

The technical advantages of the integrated plant according to the invention are:
- in the intermediate/summer seasons regime, above all in the humid climates, the plant allows significant energetic savings (30-40%) with respect to a traditional air conditioning plant; it allows moreover to realise in the intermediate seasons the only dehumidification of air (which is impossible with a traditional plant).
- The application of the integrated plant according to the invention on electric vehicles allows remarkable increases of autonomy on equal comfort of the passengers.
- In the winter regime, the plant can operate also as a simple heat pump, thanks to the action of a simple switching valve to invert the circulation direction of the refrigerant fluid between the only batteries, thus excluding completely the CMCs.
- The proposed plan is able to utilise, thanks to the improved CMCs, all the liquid desiccants, among which also those with better thermal-physical and thermal-dynamical properties (for example LiCl) without corrosion problems.
- Thanks to the improved CMCs, the assembly of this plant comes out to be relatively simple; all the other components can be indeed they can directly on the market.

The main application fields of the invention are:
- air conditioning in civil and industrial ambients;
- conditioning of transportation means;
- cold chain.

In the foregoing, the preferred embodiments of the present inventions have been described and variations to the invention have been suggested, but it is to be understood that those skilled in the art will be able to modify and change them without thereby falling outside the relevant scope of protection as defined in the appended claims.

## Claims

1. Modular contactor (1000, 4000, 5000) operating with three fluids: air, thermovector fluid and desiccant fluid, said modular contactor (1000, 4000, 5000) comprising one or more modules (100) in a stack, **characterized in that** each module (100) includes:
- a frame (110, 110',10") extending substantially on one frame plane, with a first surface on a side of the frame plane and a second surface on the opposite side of the frame plane;
- a plurality of tubes (120), with a main extension direction, suitable to be traversed by said thermovector fluid and fixed to said frame (110,110',110") in such a way that the tubes (120) of said plurality of tubes (120) are spaced apart to each other and disposed on said frame plane;
- a first hydrophobic membrane (131) and a second hydrophobic membrane (132) fixed to said frame in such a way to face respectively said first and said second surface, and in such a way to form a desiccant fluid compartment enclosing said plurality of tubes (120) adapted to be traversed by said desiccant fluid along said main extension direction;
said one or more modules (100) being stacked in such a way that:
- they are alternated with at least a spacer (140), shaped and disposed in such a way that it creates, with said first hydrophobic membrane (131) and said second hydrophobic membrane (132) of adjacent modules (100) in the stack, respectively a first and a second air compartment that are suitable to be traversed by the air transversally to the main extension direction of said tubes (120).

2. Modular contactor (1000,4000,5000) according to claim 1, **characterised in that**:
- said frame (110,110',110) has an external perimeter;
- said plurality of tubes (120) is fixed to said frame (110,110',110") in such a way that:
o each tube (120) of said plurality of tubes (120) has a first end and a second end fixed respectively to a first and a second frame element (115), each of said first and second frame element crossing said frame (110,11',110) and connecting to two points of said external perimeter, said first and second frame element not intersecting with each other;
o each tube (120) of said plurality of tubes traverses a third and a fourth frame element (116) disposed between said first and second frame element (115), each of said third and fourth frame element (116) crossing said frame (110,110',110") and connecting to two points of said external perimeter, said third and fourth frame element not intersecting with each other;
- said first hydrophobic membrane (131) and said second hydrophobic membrane (132) being fixed to said frame (110,110',110") between said third and said fourth frame element (116);
said one or more module (100) being stacked in such a way that:
- said first and second frame element (115) respectively form, with said external perimeter, an inlet chamber (A) and an outlet chamber (A) for the thermovector fluid passing through said tubes (120),
- said third and fourth frame element (116) respectively form, with said external perimeter and said first and second frame element (115) an inlet chamber (B) and an outlet chamber (B) for the desiccant fluid passing through said desiccant fluid compartment in said main extension direction.

3. Modular contactor (1000,4000,5000) according to claim 1 or 2, **characterised in that** it comprises a lower end module (150) and an upper end module (150) which close the stack of modules (100) respectively at its lower and upper ends.

4. Modular contactor (1000,4000,5000) according to any claim 1 to 3, **characterised in that** said tubes (120) are in a material resistant to corrosion, in particular in titanium.

5. Modular contactor (1000,4000) according to any claim 1 to 4, **characterised in that** said frame is rectangular.

6. Modular contactor (1000,4000,5000) according to any claim 1 to 5, **characterised in that** said frame (110,110',110") has a reduced thickness in a zone corresponding to said first and second hydrophobic membrane (131,132), in such a way that said at least a spacer (140) is inserted in said zone only.

7. Modular contactor (1000,4000,5000) according to claim 6, **characterised in that** said at least a spacer (140) is an only spacer (140) between each two adjacent modules (100), said an only spacer (140) forming an air passage compartment with the first hydrophobic membrane (131) of one of the two adjacent modules and with the second hydrophobic membrane (132) of the other of the two adjacent modules (100).

8. Modular contactor (1000,4000,5000) according to any claim 1-7, **characterised in that** said tubes are divided in two or more groups (120₁, 120₂, 120₃) and said frame (110") is shaped in such a way to form an inlet (161) of the thermovector fluid for a first group of said two or more groups, an outlet (163) of thermovector fluid for a second group of said two or more groups, and suitable exchange zones (162, 164) of thermovector fluid between the groups of said two or more groups.

9. Integrated plant (2000, 3000) for the dehumidification and conditioning of air, comprising:
- a dehumidification and/or conditioning unit (CMC1) for the dehumidification and cooling of air by means of a desiccant fluid,
- cooling means (C,L), connected to said dehumidification and/or conditioning unit (CMC1), adapted to feed said dehumidification and/or conditioning unit (CMC1) with thermovector fluid,
**characterised in that**:
- said dehumidification and/or conditioning unit (CMC1) is the modular contactor (1000) according to any claim 1 to 8;
- it is comprised a regeneration unit (CMC2) of said desiccant fluid connected to the dehumidification and/or conditioning unit (CMC1);
- said regeneration unit (CMC2) is suitable to re-concentrate said desiccant fluid, coming from said dehumidification and/or conditioning unit (CMC1) in a diluted state, discharging outside water and using for such a re-concentration process the condensation thermal energy of the thermovector fluid, the desiccant fluid, once re-concentrated, being fed back to said dehumidification and/or conditioning unit (CMC1).

10. Integrated plant (2000, 3000) according to claim 9, **characterised in that** said regeneration unit (CMC2) is constituted by a further modular contactor (1000, 4000, 5000) according to any claim 1 to 8.

11. Integrated plant (3000) according to any claim 9 or 10, **characterised in that** said cooling means (L,C) feed also an evaporation coil (B1) and a condensation coil (B2) respectively in parallel and in series with said dehumidification and/or conditioning unit (CMC1) and said regeneration unit (CMC2).

12. Integrated plant (3000) according to claim 10, **characterised in that** it comprises three-ways valves (V1, V2, V3, V4) adapted to divide the flow rate of the thermovector fluid between said dehumidification and/or conditioning unit (CMC1) and said evaporation coil (B1) on one hand, and said regeneration unit (CMC2) and said condensation coil (B2) on the other hand, up to be able to exclude said dehumidification and/or conditioning unit (CMC1) and said regeneration unit (CMC2) in a case, or said evaporation coil (B1) and said condensation coil (B2) in another case.

13. Integrated plant (3000) according to claim 10 or 12, **characterised in that** it further comprises a four-ways commutation valve (VC) adapted to invert the flux of the thermovector fluid between said evaporation coil (B1) and said condensation coil (B2) thus working as a heat pump.

14. Free cooling plant for rooms, comprising a free cooling unit for the production of free cooled water for supplying suitable radiant panels to the end of realizing internal comfort conditions in said rooms, said free cooling rooms utilizing a contact module using three fluids, air, refrigerant fluid and liquid phase, the plant being **characterized in that**:
- the contact module is the modular contactor (1000, 4000, 5000) according to any claim 1 to 8;
- the liquid phase is water that cools by humidifying the air crossing the modular contactor (1000, 4000, 5000);
- the refrigerant fluid feeds in closed circuit said radiant panels and is constituted by water flowing in the tubes of the modular contactor (1000, 4000, 5000) .

## Patentansprüche

1. Modularer Kontaktor (1000, 4000, 5000), der mit drei Fluiden arbeitet: Luft, Wärmeträgerfluid und Trockenmittelfluid, wobei der modulare Kontaktor (1000, 4000, 5000) ein oder mehrere Module (100) in einem Stapel umfasst, **dadurch gekennzeichnet, dass** jedes Modul (100) Folgendes aufweist:
- einen Rahmen (110, 110', 110"), der sich im Wesentlichen auf einer Rahmenebene erstreckt, mit einer ersten Fläche an einer Seite der Rahmenebene und einer zweiten Fläche an der entgegengesetzten Seite der Rahmenebene;
- eine Vielzahl von Rohren (120), mit einer Haupterstreckungsrichtung, die dafür geeignet sind, vom Wärmeträgerfluid durchlaufen zu werden, und derart am Rahmen (110, 110', 110") befestigt sind, dass die Rohre (120) der Vielzahl von Rohren (120) voneinander beabstandet und auf der Rahmenebene angeordnet sind;
- eine erste hydrophobe Membran (131) und eine zweite hydrophobe Membran (132), die derart am Rahmen befestigt sind, dass sie jeweils der ersten bzw. der zweiten Fläche zugewandt sind, und derart, dass sie ein Trockenmittelfluidabteil bilden, das die Vielzahl von Rohren (120) einschließt und dafür ausgelegt ist, vom Trockenmittelfluid entlang der Haupterstreckungsrichtung durchlaufen zu werden;
wobei das eine oder die mehreren Module (100) derart gestapelt sind, dass:
- sie sich mit mindestens einem Abstandhalter (140) abwechseln, der derart geformt und angeordnet ist, dass er mit der ersten hydrophoben Membran (131) und der zweiten hydrophoben Membran (132) benachbarter Module (100) im Stapel jeweils ein erstes bzw. ein zweites Luftabteil bildet, die dafür geeignet sind, von der Luft quer zur Haupterstreckungsrichtung der Rohre (120) durchlaufen zu werden.

2. Modularer Kontaktor (1000, 4000, 5000) nach Anspruch 1, **dadurch gekennzeichnet, dass**:
- der Rahmen (110, 110', 110") einen Außenumfang hat;
- die Vielzahl von Rohren (120) derart am Rahmen (110, 110', 110") befestigt ist, dass:
o jedes Rohr (120) der Vielzahl von Rohren (120) ein erstes Ende und ein zweites Ende hat, die jeweils an einem ersten bzw. einem zweiten Rahmenelement (115) befestigt sind, wobei jedes des ersten und des zweiten Rahmenelements den Rahmen (110, 110', 110") kreuzt und mit zwei Punkten des Außenumfangs verbunden ist, wobei das erste und das zweite Rahmenelement einander nicht schneiden;
o jedes Rohr (120) der Vielzahl von Rohren (120) ein drittes und ein viertes Rahmenelement (116) quert, die zwischen dem ersten und dem zweiten Rahmenelement (115) angeordnet sind, wobei jedes des dritten und des vierten Rahmenelements (116) den Rahmen (110, 110', 110") kreuzt und mit zwei Punkten des Außenumfangs verbunden ist, wobei das dritte und das vierte Rahmenelement einander nicht schneiden;
- die erste hydrophobe Membran (131) und die zweite hydrophobe Membran (132) am Rahmen (110, 110', 110") zwischen dem dritten und dem vierten Rahmenelement (116) befestigt sind;
wobei das eine oder die mehreren Module (100) derart gestapelt sind, dass:
- das erste und das zweite Rahmenelement (115) jeweils mit dem Außenumfang eine Einlasskammer (A) bzw. eine Auslasskammer (A) für das Wärmeträgerfluid bilden, das die Rohre (120) durchläuft,
- das dritte und das vierte Rahmenelement (116) jeweils mit dem Außenumfang und dem ersten bzw. dem zweiten Rahmenelement (115) eine Einlasskammer (B) bzw. eine Auslasskammer (B) für das Trockenmittelfluid bilden, das das Trockenmittelfluidabteil in der Haupterstreckungsrichtung durchläuft.

3. Modularer Kontaktor (1000, 4000, 5000) nach Anspruch 1 oder 2, **dadurch gekennzeichnet, dass** er ein unteres Endmodul (150) und ein oberes Endmodul (150) umfasst, die den Stapel der Module (100) jeweils am unteren bzw. oberen Ende schließen.

4. Modularer Kontaktor (1000, 4000, 5000) nach einem der Ansprüche 1 bis 3, **dadurch gekennzeichnet, dass** die Rohre (120) aus einem korrosionsbeständigen Material bestehen, insbesondere aus Titan.

5. Modularer Kontaktor (1000, 4000) nach einem der Ansprüche 1 bis 4, **dadurch gekennzeichnet, dass** der Rahmen rechteckig ist.

6. Modularer Kontaktor (1000, 4000, 5000) nach einem der Ansprüche 1 bis 5, **dadurch gekennzeichnet, dass** der Rahmen (110, 110', 110") in einem Bereich, der der ersten und der zweiten hydrophoben Membran (131, 132) entspricht, eine verringerte Dicke hat, sodass der mindestens eine Abstandhalter (140) nur in diesem Bereich eingefügt wird.

7. Modularer Kontaktor (1000, 4000, 5000) nach Anspruch 6, **dadurch gekennzeichnet, dass** der mindestens eine Abstandhalter (140) ein einziger Abstandhalter (140) zwischen jeweils zwei benachbarten Modulen (100) ist, wobei der einzige Abstandhalter (140) ein Luftkanalabteil mit der ersten hydrophoben Membran (131) von einem der zwei benachbarten Module und mit der zweiten hydrophoben Membran (132) des anderen der zwei benachbarten Module (100) bildet.

8. Modularer Kontaktor (1000, 4000, 5000) nach einem der Ansprüche 1-7, **dadurch gekennzeichnet, dass** die Rohre in zwei oder mehr Gruppen (120₁, 120₂, 120₃) aufgeteilt sind und der Rahmen (110") derart geformt ist, dass er einen Einlass (161) des Wärmeträgerfluids für eine erste Gruppe der zwei oder mehr Gruppen, einen Auslass (163) des Wärmeträgerfluids für eine zweite Gruppe von diesen zwei oder mehr Gruppen und geeignete Austauschbereiche (162, 164) des Wärmeträgerfluids zwischen den Gruppen von diesen zwei oder mehreren Gruppen bildet.

9. Integrierte Anlage (2000, 3000) für die Entfeuchtung und Konditionierung von Luft, umfassend:
- eine Entfeuchtungs- und/oder Konditionierungseinheit (CMC1) für die Entfeuchtung und Kühlung von Luft mittels eines Trockenmittelfluids,
- Kühlmittel (C, L), die mit der Entfeuchtungs- und/oder Konditionierungseinheit (CMC1) verbunden und zum Speisen der Entfeuchtungs- und/oder Konditionierungseinheit (CMC1) mit Wärmeträgerfluid ausgelegt sind,
**dadurch gekennzeichnet, dass**:
- die Entfeuchtungs- und/oder Konditionierungseinheit (CMC1) der modulare Kontaktor (1000) nach einem der Ansprüche 1 bis 8 ist;
- eine Regenerationseinheit (CMC2) des Trockenmittelfluids umfasst wird, die mit der Entfeuchtungs- und/oder Konditionierungseinheit (CMC1) verbunden ist;
- die Regenerationseinheit (CMC2) zum erneuten Konzentrieren des Trockenmittelfluids geeignet ist, das in verdünntem Zustand aus der Entfeuchtungs- und/oder Konditionierungseinheit (CMC1) kommt, wobei äußeres Wasser abgeführt wird und für einen solchen Prozess der erneuten Konzentrierung die Wärmeenergie der Kondensation des Wärmeträgerfluids genutzt wird und das Trockenmittelfluid, sobald es erneut konzentriert wurde, in die Entfeuchtungs- und/oder Konditionierungseinheit (CMC1) rückgeleitet wird.

10. Integrierte Anlage (2000, 3000) nach Anspruch 9, **dadurch gekennzeichnet, dass dadurch gekennzeichnet, dass** die Regenerationseinheit (CMC2) aus einem weiteren modularen Kontaktor (1000, 4000, 5000) nach einem der Ansprüche 1 bis 8 besteht.

11. Integrierte Anlage (3000) nach einem der Ansprüche 9 oder 10, **dadurch gekennzeichnet, dass** die Kühlmittel (L, C) auch eine Verdampfungsspule (B1) und eine Kondensationsspule (B2) speisen, die jeweils parallel bzw. in Reihe mit der Entfeuchtungs- und/oder Konditionierungseinheit (CMC1) und der Regenerationseinheit (CMC2) verbunden sind.

12. Integrierte Anlage (3000) nach Anspruch 10, **dadurch gekennzeichnet, dass** sie Drei-Wege-Ventile (V1, V2, V3, V4) umfasst, die dafür ausgelegt sind, die Strömungsrate des Wärmeträgerfluids zwischen der Entfeuchtungs- und/oder Konditionierungseinheit (CMC1) und der Verdampfungsspule (B1) einerseits und der Regenerationseinheit (CMC2) und der Kondensationsspule (B2) andererseits soweit aufzuteilen, dass in einem Fall die Entfeuchtungs- und/oder Konditionierungseinheit (CMC1) und die Regenerationseinheit (CMC2) oder in einem anderen Fall die Verdampfungsspule (B1) und die Kondensationsspule (B2) ausgeschlossen werden können.

13. Integrierte Anlage (3000) nach Anspruch 10 oder 12, **dadurch gekennzeichnet, dass** sie ferner ein Vier-Wege-Kommutationsventil (VC) umfasst, das dafür ausgelegt ist, den Fluss des Wärmeträgerfluids zwischen der Verdampfungsspule (B1) und der Kondensationsspule (B2) umzukehren, sodass die Anlage als eine Wärmepumpe arbeitet.

14. Freikühlanlage für Räume, umfassend eine Freikühleinheit für die Erzeugung von freigekühltem Wasser zum Versorgen geeigneter Flächenheizstrahler, um innere angenehme Bedingungen in den Räumen umzusetzen, wobei die Freikühlräume ein Kontaktmodul nutzen, das drei Fluide verwendet: Luft, Kältemittelfluid und eine flüssige Phase, wobei die Anlage **dadurch gekennzeichnet ist, dass**:
- das Kontaktmodul der modulare Kontaktor (1000, 4000, 5000) nach einem der Ansprüche 1 bis 8 ist;
- die flüssige Phase Wasser ist, das durch Befeuchten der Luft kühlt, die den modularen Kontaktor (1000, 4000, 5000) quert;
- das Kältemittelfluid in einem geschlossenen Kreislauf die Flächenheizstrahler speist und aus Wasser besteht, das in den Rohren des modularen Kontaktors (1000, 4000, 5000) fließt.

## Revendications

1. Contacteur modulaire (1000, 4000, 5000) fonctionnant avec trois fluides : de l'air, un fluide thermovecteur et un fluide dessiccant, ledit contacteur modulaire (1000, 4000, 5000) comprenant un ou plusieurs modules (100) dans une pile, **caractérisé en ce que** chaque module (100) comprend :
- un châssis (110, 110', 110") s'étendant sensiblement sur un plan de châssis avec une première surface sur un côté du plan de châssis et une seconde surface sur le côté opposé du plan de châssis ;
- une pluralité de tubes (120) avec une direction d'extension principale convenant pour être traversés par ledit fluide thermovecteur et fixés audit châssis (110, 110', 110") de telle manière que les tubes (120) de ladite pluralité de tubes (120) soient espacés les uns des autres et disposés sur ledit plan de châssis ;
- une première membrane hydrophobe (131) et une seconde membrane hydrophobe (132) fixées audit châssis de manière à se trouver en regard respectivement desdites première et seconde surfaces, et de manière à former un compartiment de fluide dessiccant enserrant ladite pluralité de tubes (120) adaptés pour être traversés par ledit fluide dessiccant le long de ladite direction d'extension principale ;
lesdits un ou plusieurs modules (100) étant empilés de telle sorte manière :
- qu'ils sont alternés avec au moins un élément d'espacement (140) façonné et disposé de manière à créer, avec ladite première membrane hydrophobe (131) et ladite seconde membrane hydrophobe (132) de modules adjacents (100) de la pile, respectivement des premier et second compartiments d'air qui conviennent pour être traversés par l'air transversalement à la direction d'extension principale desdits tubes (120).

2. Contracteur modulaire (1000, 4000, 5000) selon la revendication 1, **caractérisé en ce que** :
- ledit châssis (110, 110', 110") a un périmètre externe ;
- ladite pluralité de tubes (120) est fixée audit châssis (110, 110', 110") de telle manière que :
o chaque tube (120) de ladite pluralité de tubes (120) a une première extrémité et une seconde extrémité fixées respectivement à des premier et deuxième élément de châssis (115), chacun desdits premier et deuxième éléments de châssis croisant ledit châssis (110, 110', 110") et se raccordant à deux points dudit périmètre externe, lesdits premier et second éléments de châssis ne se coupant pas l'un l'autre ;
o chaque tube (120) de ladite pluralité de tubes traverse des troisième et quatrième éléments de châssis (116) disposés entre lesdits premier et deuxième éléments de châssis (115), chacun desdits troisième et quatrième éléments de châssis (116) croisant ledit châssis (110, 110', 110") et se raccordant à deux points dudit périmètre externe, lesdits troisième et quatrième éléments de châssis ne se coupant pas l'un l'autre ;
- ladite première membrane hydrophobe (131) et ladite seconde membrane hydrophobe (132) étant fixées audit châssis (110, 110', 110") entre lesdits troisième et quatrième éléments de châssis (116) ;
lesdits un ou plusieurs modules (100) étant empilés de la manière suivante :
- lesdits premier et deuxième éléments de châssis (115) forment respectivement, avec ledit périmètre externe, une chambre d'entrée (A) et une chambre de sortie (A) pour le fluide thermovecteur passant à travers lesdits tubes (120),
- lesdits troisième et quatrième éléments de châssis (116) forment respectivement avec ledit périmètre externe et lesdits premier et deuxième éléments de châssis (115), une chambre d'entrée (B) et une chambre de sortie (B) pour le fluide dessiccant passant à travers ledit compartiment de fluide dessiccant dans ladite direction d'extension principale.

3. Contacteur modulaire (1000, 4000, 5000) selon la revendication 1 ou 2, **caractérisé en ce qu'**il comprend un module d'extrémité inférieure (150) et un module d'extrémité supérieure (150) qui ferment la pile de modules (100), respectivement, aux extrémités inférieure et supérieure.

4. Contacteur modulaire (1000, 4000, 5000) selon l'une quelconque des revendications 1 à 3, **caractérisé en ce que** lesdits tubes (120) sont formés d'un matériau résistant à la corrosion, en particulier de titane.

5. Contacteur modulaire (1000, 4000) selon l'une quelconque des revendications 1 à 4, **caractérisé en ce que** ledit châssis est rectangulaire.

6. Contacteur modulaire (1000, 4000, 5000) selon l'une quelconque des revendications 1 à 5, **caractérisé en ce que** ledit châssis (110, 110', 110") a une épaisseur réduite dans une zone correspondant auxdites première et seconde membranes hydrophobes (131, 132) de manière que ledit au moins un élément d'espacement (140) soit inséré dans ladite zone seulement.

7. Contacteur modulaire (1000, 4000, 5000) selon la revendication 6, **caractérisé en ce que** ledit au moins un élément d'espacement (140) est un seul élément d'espacement (140) entre chaque ensemble de deux modules adjacents (100), ledit un seul élément d'espacement (140) formant un compartiment de passage d'air avec la première membrane hydrophobe (131) de l'un des deux modules adjacents et avec la seconde membrane hydrophobe (132) de l'autre des deux modules adjacents (100).

8. Contacteur modulaire (1000, 4000, 5000) selon l'une quelconque des revendications 1 à 7, **caractérisé en ce que** lesdits tubes sont divisés en deux groupes (120₁, 120₂, 120₃) ou plus, et ledit châssis (110") est façonné de manière à former une entrée (161) du fluide thermovecteur pour un premier groupe desdits deux groupes ou plus, une sortie (163) de fluide thermovecteur pour un second groupe desdits deux ou plusieurs groupes, et des zones d'échange appropriées (162, 164) de fluide thermovecteur entre les groupes desdits deux ou plusieurs groupes.

9. Installation intégrée (2000, 3000) pour la déshumidification et/ou le conditionnement de l'air, comprenant :
- une unité de déshumidification et/ou de conditionnement (CMC1) pour la déshumidification et le refroidissement de l'air au moyen d'un fluide dessiccant,
- des moyens de refroidissement (C, L) raccordés à ladite unité de déshumidification et/ou de conditionnement (CMC1) adaptés pour alimenter en fluide thermovecteur ladite unité de déshumidification et/ou de conditionnement (CMC1),
**caractérisée en ce que** :
- ladite unité de déshumidification et/ou de conditionnement (CMC1) est le contacteur modulaire (1000) selon l'une quelconque des revendications 1 à 8 ;
- elle est constituée d'une unité de régénération (CMC2) dudit fluide dessiccant raccordée à l'unité de déshumidification et/ou de conditionnement (CMC1) ;
- ladite unité de régénération (CMC2) convient pour reconcentrer ledit fluide dessiccant, venant de ladite unité de déshumidification et/ou de conditionnement (CMC1) à l'état dilué, en déchargeant à l'extérieur l'eau et en utilisant pour un tel processus de reconcentration l'énergie thermique de condensation du fluide thermovecteur, le fluide dessiccant, une fois reconcentré, étant renvoyé à ladite unité de déshumidification et/ou de conditionnement (CMC1).

10. Installation intégrée (2000, 3000) selon la revendication 9, **caractérisée en ce que** ladite unité de régénération (CMC2) est constituée d'un autre contacteur modulaire (1000, 4000, 5000) selon l'une quelconque des revendications 1 à 8.

11. Installation intégrée (3000) selon l'une quelconque des revendications 9 ou 10, **caractérisée en ce que** lesdits moyens de refroidissement (L, C) alimentent également une bobine d'évaporation (B1) et une bobine de condensation (B2), respectivement, en parallèle et en série avec ladite unité de déshumidification et/ou de conditionnement (CMC1) et ladite unité de régénération (CMC2).

12. Installation intégrée (3000) selon la revendication 10, **caractérisée en ce qu'**elle comprend des vannes à trois voies (V1, V2, V3, V4) adaptées pour diviser le débit du fluide thermovecteur entre ladite unité de déshumidification et/ou de conditionnement (CMC1) et ladite bobine d'évaporation (B1) d'une part, et ladite unité de régénération (CMC2) et ladite bobine de condensation (B2) d'autre part, jusqu'à être à même d'exclure ladite unité de déshumidification et/ou de conditionnement (CMC1) et ladite unité de régénération (CMC2) dans un cas, ou ladite bobine d'évaporation et ladite bobine de condensation (B2) dans un autre cas.

13. Installation intégrée (3000) selon la revendication 10 ou 12, **caractérisée en ce qu'**elle comprend en outre une vanne de commutation à quatre voies (VC) adaptée pour inverser le flux du fluide thermovecteur entre ladite bobine d'évaporation et ladite bobine de condensation (B2), opérant ainsi comme une pompe à chaleur.

14. Installation de refroidissement libre pour pièces, comprenant une unité de refroidissement libre pour la production d'eau refroidie libre afin d'alimenter des panneaux rayonnants appropriés afin de réaliser des conditions de confort interne dans lesdites pièces, lesdites pièces de refroidissement libre utilisant un module de contact mettant en oeuvre trois fluides, de l'air, un fluide réfrigérant et une phase liquide, l'installation étant **caractérisée en ce que** :
- le module de contact est le contacteur modulaire (1000, 4000, 5000) selon l'une quelconque des revendications 1 à 8 ;
- la phase liquide est de l'eau qui refroidit par humidification de l'air croisant le contacteur modulaire (1000, 4000, 5000) ;
- le fluide réfrigérant alimente en circuit fermé lesdits panneaux rayonnants et est constitué par de l'eau s'écoulant dans les tubes du contacteur modulaire (1000, 4000, 5000).
